# FASCICULE DE BREVET EUROPEEN

(11) **EP 0 713 832 B1**
(45) Date de publication et mention de la délivrance du brevet: **26.07.2000**
(21) Numéro de dépôt: 94402678.0
(22) Date de dépôt: 23.11.1994
(51) Int. Cl.: B65D 47/20, B29C 45/14, B29C 45/16

(54) **Procédé de moulage d'un ensemble de distribution équipé d'un système de fermeture**
Verfahren zum Giessen einer Ausgabevorrichtung, versehen mit einem Verschlusselement
Method of moulding a dispensing device provided with a closure system

(43) Date de publication de la demande: 29.05.1996
(60) Demande divisionnaire: 99114908.9
(73) Titulaire: L'OREAL, 75008 Paris (FR)
(72) Inventeur: de Laforcade, Vincent, F-92140 Clamart (FR); Baudin, Gilles, F-95610 Eragny (FR)
(74) Mandataire: Lhoste, Catherine

(56) Documents cités:
- EP-A- 0 278 125
- DE-U- 9 307 083
- FR-A- 2 016 300
- FR-A- 2 654 078
- FR-A- 2 656 279
- US-A- 4 789 082

## Description

La présente invention concerne un procédé de moulage d'une tête de distribution destinée à équiper un ensemble de distribution comportant un système de fermeture.

Plus particulièrement, le procédé conforme à la présente invention concerne un ensemble de distribution comportant un récipient et une tête de distribution contenant au moins un canal de distribution du produit à distribuer, un système de fermeture étant prévu pour fermer la partie terminale, s'ouvrant sur l'extérieur, du canal de distribution, ledit système de fermeture étant formé par un obturateur qui fait partie d'une pièce en matériau élastiquement déformable et par au moins un siège, l'obturateur étant en contact avec son siège associé lorsqu'il n'y a pas de distribution, s'écartant dudit siège par déformation élastique sous la poussée du produit à distribuer et revenant par élasticité en contact avec ledit siège lorsque cesse la distribution, l'obturateur étant constitué par une lèvre élastique s'écartant du siège par flexion autour d'un axe perpendiculaire à la direction de poussée du produit.

Un tel ensemble de distribution, tel que celui qui est décrit, par exemple, dans le brevet français FR-A-1 573 165, permet une protection maximale du produit qu'il renferme contre les agressions extérieures : sable, poussière, eau, ou contre les réactions d'oxydation provoquées par les agents chimiques externes, en particulier par l'oxygène de l'air.

On connaît, par ailleurs, par le document DE-U-93 07083 un ensemble de distribution comportant une tête de distribution pourvue d'un corps rigide et d'un système de fermeture élastique, apte à fermer, en position de repos, un réservoir de produit, et s'ouvrir en position de distribution sous la poussée du produit. Bien que la tête de distribution et le système de fermeture puissent former une seule pièce, par exemple par bi-injection, cette tête de distribution présente l'inconvénient de nécessiter, après moulage de la partie rigide, son transfert dans un second moule pour le moulage du système de fermeture élastique, ce qui est compliqué à réaliser et ce qui grève donc le prix de revient de cette tête de distribution.

La présente invention a pour but de réaliser un tel ensemble dont le prix de revient est inférieur à celui des ensembles connus jusqu'ici et qui, en outre, fonctionne avec une grande fiabilité.

Ainsi, l'invention a pour objet un procédé de moulage d'une tête de distribution, destinée à être montée sur un récipient, et constituée d'un premier matériau rigide et d'un second matériau élastomérique, ladite tête contenant au moins un passage de distribution du produit à distribuer, un système de fermeture étant prévu pour fermer le passage de distribution, ledit système de fermeture comportant un obturateur formé par ledit second matériau et par au moins un siège formé par ledit premier matériau, l'obturateur étant constitué par une lèvre élastique s'écartant du siège par flexion perpendiculairement à la direction de poussée du produit et étant en contact avec le siège lorsque cesse la distribution, un élément d'accrochage formé par ledit premier matériau étant noyé dans ledit obturateur, l'obturateur et le siège constituant un embout de fermeture recouvrant, de façon étanche, la partie terminale, s'ouvrant sur l'extérieur, du passage de distribution ; ledit procédé consistant à :
a) injecter dans un moule s'ouvrant en deux parties, comportant chacune un tiroir, le premier matériau rigide, de manière à mouler les parties de la tête formées dudit matériau rigide,
b) déplacer chacun des tiroirs pour former tout autour de l'élément d'accrochage un volume d'une épaisseur correspondant sensiblement à l'épaisseur de l'obturateur,
c) injecter le second matériau élastomérique dans ledit volume, les premier et second matériaux étant chimiquement incompatibles entre eux, de sorte qu'il ne se crée pas de liaison chimique entre l'obturateur et son siège, et
d) démouler la tête de distribution.

De préférence, le premier matériau est un polypropylène et le second matériau est l'éthylène vinyl acétate.

Avantageusement, la température d'injection du premier matériau est voisine de 160 °C, et supérieure à la température d'injection du second matériau.

Ledit élément d'accrochage est avantageusement une barre traversant le passage de distribution, surmoulée par la pièce élastique, ce qui confère plus de tenue à la pièce élastique.

Selon une forme de réalisation particulière, l'élément en matériau rigide peut comporter, en outre, une articulation pour la fixation à pivotement d'un couvercle comportant un organe pour immobiliser l'obturateur, au stockage, en position rabattue du couvercle.

Avantageusement, la matière formant la pièce en matériau élastique a une dureté comprise dans la gamme allant de 40 Shore A à 50 Shore D et de préférence de 50 Shore A à 90 Shore A.

Ce matériau élastique est choisi, avantageusement, parmi les polyéthylènes de basse densité, l'éthylène vinyl acétate, les polychlorures de vinyle, les terpolymères de bloc de polypropylène avec des motifs styrène/éthylène - butène/styrène, et les polyuréthanes thermoplastiques.

L'élément en matériau rigide, est, de préférence, moulé en un matériau choisi parmi les polyéthylènes de haute densité et les polypropylènes.

Selon l'invention, on peut surinjecter, par exemple, la pièce élastique en polyéthylène de basse densité sur un siège rigide en polypropylène, ou surinjecter de l'éthylène vinyl acétate sur du polypropylène ou sur du polyéthylène de haute densité. D'autres couples de matériaux élastiques rigides sont constitués par les combinaisons : polychlorure de vinyle - polypropylène ou polyéthyléne de haute densité ; terpolymère de bloc de polypropylène/styrène éthyléne/butène styrène - polypropylène ou polyéthylène de haute densité ou bien polyuréthane thermoplastique - polypropylène ou polyéthylène de haute densité.

Pour mieux faire comprendre l'objet de l'invention, on va en décrire, maintenant, à titre d'exemple purement illustratif et non limitatif, un mode de réalisation représenté sur les dessins annexés.

Sur ces dessins :
- la figure 12 montre, en coupe longitudinale, un ensemble de distribution équipé d'une tête de distribution selon un mode de réalisation, cette tête est destinée à être montée sur un récipient souple compressible manuellement ;
- la figure 13 montre une tête de distribution selon une variante de réalisation de la figure 12 ;
- les figures 14 et 15 montrent schématiquement les opérations de moulage conduisant à l'embout de fermeture de la tête de distribution de la figure 13.

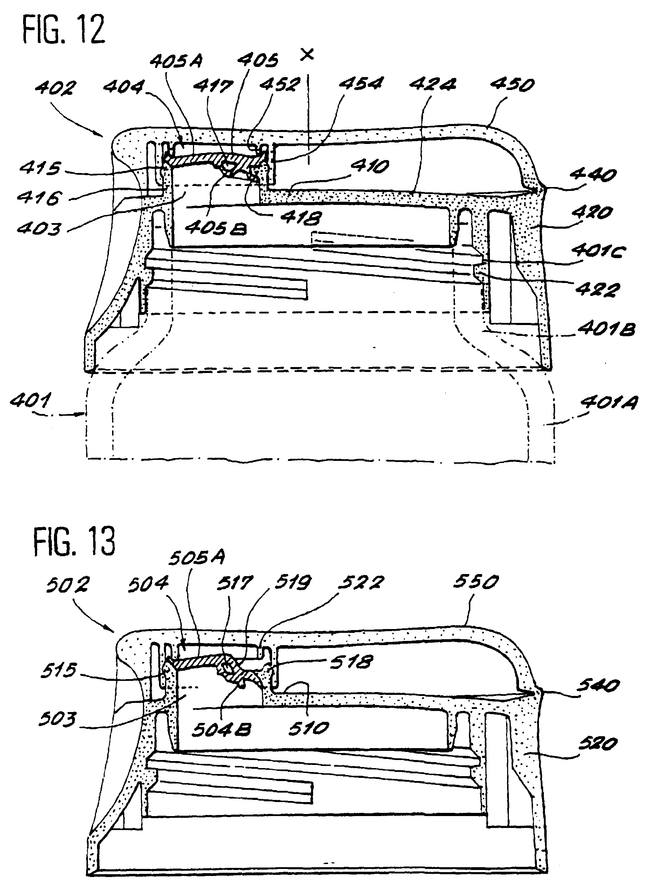

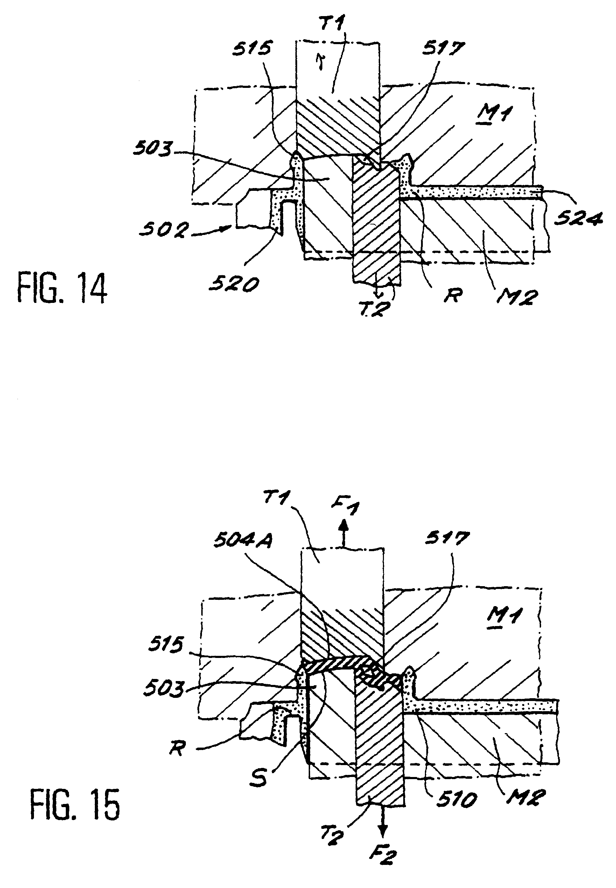

La figure 12 montre un ensemble de distribution 401 équipé d'une tête de distribution 402, cette tête étant montée sur un récipient souple 401A compressible manuellement. On aurait pu envisager un ensemble de distribution du type stick avec montée du produit grâce à l'actionnement d'une molette. Le récipient 401A comporte un goulot 401B muni d'un filetage 401C. La tête de distribution 402 comporte un corps 420 de forme générale cylindrique, muni d'un filetage interne 422, apte à coopérer avec le filetage 401C du récipient. A son extrémité opposée au récipient 401A, le corps 420 est fermé par un plateau circulaire 424, comportant une cheminée cylindrique 426, définissant un canal de distribution 403. Ce canal de distribution est excentré par rapport à l'axe central X de l'ensemble de distribution 401. Le plateau 424 comporte, en outre, du côté opposé au canal 403, une charnière 440, par laquelle un couvercle 450 est raccordé au corps 420. Ce couvercle est pivotant et comporte une jupe d'étanchéité cylindrique 454, apte à s'encliqueter, en position rabattue du couvercle, autour de la cheminée 426. A l'intérieur de cette jupe 454 est formé, de façon concentrique, un bourrelet annulaire 452, dont le rôle sera expliqué plus loin.

A l'intérieur du canal de distribution 403 est disposée une barre 417 de section trapézoïdale, solidaire des parois de la cheminée et traversant le canal 403. Ce canal 403 comporte, en outre, un ergot 418, disposé en vis-à-vis de la barre 417.

La cheminée 426 comporte un bord annulaire 415 qui forme un siège rigide pour un obturateur élastique 405A. Cet obturateur 405A a une forme circulaire et est légèrement bombé vers l'extérieur, dans sa partie centrale. Du côté tourné vers le récipient, l'obturateur comporte une zone 405B en surépaisseur, dans laquelle sont noyés la barre 417 et l'ergot 418. L'obturateur 405A au niveau du bord 415 du canal de distribution 403 forme, de façon étanche, un embout de distribution unidirectionnel 404, apte à s'ouvrir sous la poussée du produit, par exemple lorsque l'utilisateur exerce une pression sur le récipient souple 401A, et à se refermer, lorsque cesse la distribution.

Après l'utilisation, le couvercle 450 est rabattu pour fermer le canal de distribution. Lors de cette opération, le bourrelet 452 vient se loger sur la périphérie de l'obturateur en immobilisant celui-ci. Ainsi, toute fuite accidentelle de produit est évitée, par exemple pendant le transport.

La figure 13 montre une variante de la tête de distribution de la figure 12 portant la référence 502. Dans la figure 13, les éléments identiques ou semblables portent les références de la figure 12 majorés de 100. Leur description ne sera reprise que partiellement. Ainsi, seul l'obturateur 505A et son implantation dans le canal de distribution 503, diffère de l'obturateur 405A de la figure 12. Le canal 503 comporte un trottoir interne 518 en forme d'arc de cercle. Parallèlement au bord 519 du trottoir est formée une barre 517 de section parallèlépipédique. L'obturateur 505A comporte une surépaisseur 504B, dans laquelle est noyée la barre 517.

Les figures 14 et 15 sont des vues schématiques partielles illustrant le principe de l'opération de moulage de la tête de distribution 502 de la figure 13. On voit que cette opération permet le moulage de la tête de distribution 502 en une pièce, par surinjection d'un matériau élastique souple S autour de la barre 517 en matériau rigide R, traversant le canal de distribution 503.

Dans un moule s'ouvrant en deux parties M1, M2 comportant chacune un tiroir T1, T2, on injecte d'abord le matériau rigide, pour former la tête 502, par exemple en polypropylène, à une température voisine de 160°C, les tiroirs T1 et T2 étant fermés, comme montré à la figure 14. Ensuite, comme montré à la figure 15, on sépare les tiroirs T1 et T2 dans le sens des flèches F1, F2, d'une distance qui correspond approximativement à l'épaisseur de l'obturateur 504A. Puis, à une température de préférence inférieure à 160°C, on injecte le matériau élastique tel que de l'éthylène vinyl acétate pour entourer la barre d'accrochage 517. Ainsi, l'obturateur 504A est solidement ancré dans le canal de distribution 503, sans qu'il se crée de liaison chimique entre l'obturateur 504A et son siège 515.

Cette opération de moulage est d'une grande simplicité permettant de fabriquer en un seul cycle de moulage la tête de distribution, sans avoir recours aux obturateurs en élastomère nécessitant une phase de réticulation, et donc une étape de montage supplémentaire.

## Revendications

1. Procédé de moulage d'une tête de distribution (402, 502), destinée à être montée sur un récipient, et constituée d'un premier matériau rigide et d'un second matériau élastomérique, ladite tête contenant au moins un passage (403, 503) de distribution du produit à distribuer, un système de fermeture étant prévu pour fermer le passage de distribution (403, 503), ledit système de fermeture comportant un obturateur (405A, 505A) formé par ledit second matériau (405, 505) et par au moins un siège (415, 515) formé par ledit premier matériau, l'obturateur étant constitué par une lèvre élastique (405A, 505A) s'écartant du siège (415, 515) par flexion perpendiculairement à la direction de poussée du produit et étant en contact avec le siège (415, 515) lorsque cesse la distribution, un élément d'accrochage (417, 517) formé par ledit premier matériau étant noyé dans ledit obturateur, l'obturateur (405, 505) et le siège (410, 510) constituant un embout (404, 504) de fermeture recouvrant, de façon étanche, la partie terminale, s'ouvrant sur l'extérieur, du passage de distribution (403, 503) ; ledit procédé consistant à :
a) injecter dans un moule s'ouvrant en deux parties (M1, M2) comportant chacune un tiroir (T1, T2) le premier matériau rigide, de manière à mouler les parties (410, 415, 418, 420, 450, 510, 515, 518, 520, 550) de la tête (402, 502) formées dudit matériau rigide,
b) déplacer chacun des tiroirs (T1 et T2) pour former tout autour de l'élément d'accrochage un volume d'une épaisseur correspondant sensiblement à l'épaisseur de l'obturateur (405A, 505A),
c) injecter le second matériau élastomérique dans ledit volume, les premier et second matériaux étant chimiquement incompatibles entre eux, de sorte qu'il ne se crée pas de liaison chimique entre l'obturateur (504A) et son siège (515), et
d) démouler la tête de distribution.

2. Procédé selon la revendication 1, caractérisé en ce que le premier matériau est un polypropylène.

3. Procédé selon la revendication 1 ou 2, caractérisé en ce que le second matériau est l'éthylène vinyl acétate.

4. Procédé selon l'une des revendications 1 à 3, caractérisé en ce que la température d'injection du second matériau est inférieure à la température d'injection dudit premier matériau.

5. Procédé selon l'une quelconque des revendications précédentes, caractérisé en ce l'élément d'accrochage est une barre (417, 517) traversant le passage de distribution (403, 503).

## Claims

1. Method for moulding a dispensing head (402, 502) intended to be mounted on a container and made of a first rigid material and of a second elastomeric material, the said head containing at least one passage (403, 503) for dispensing the product that is to be dispensed, a closure system being provided to close the dispensing passage (403, 503), the said closure system comprising a stopper (405A, 505A) formed of the said second material (405, 505) and of at least one seat (415, 515) formed of the said first material, the stopper consisting of an elastic lip (405A, 505A) which moves away from the seat (415, 515) by bending at right angles to the direction of thrust of the product and being in contact with the seat (415, 515) when dispensing ceases, a catching element (417, 517) formed of the said first material being embedded in the said stopper, the stopper (405, 505) and the seat (410, 510) constituting a closure adapter (404, 504) which in a sealed fashion covers the end part, which opens to the outside, of the dispensing passage (403, 503); the said method consisting in:
a) injecting the first rigid material into an openable mould in two parts (M1, M2) each part comprising a slide (T1, T2) so as to mould the parts (410, 415, 418, 420, 450, 510, 515, 518, 520, 550) of the head (402, 502) formed of the said rigid material,
b) moving each of the slides (T1 and T2) to form all around the catching element a volume that has a thickness that roughly corresponds to the thickness of the stopper (405A, 505A),
c) injecting the second elastomeric material into the said volume, the first and second materials being mutually chemically incompatible, so that no chemical bond is created between the stopper (405A) and its seat (515), and
d) releasing the dispensing head from the mould.

2. Method according to Claim 1, characterized in that the first material is a polypropylene.

3. Method according to Claim 1 or 2, characterized in that the second material is ethylene vinyl acetate.

4. Method according to one of Claims 1 to 3, characterized in that the temperature at which the second material is injected is lower than the temperature at which the said first material is injected.

5. Method according to any one of the preceding claims, characterized in that the catching element is a bar (417, 517) passing through the dispensing passage (403, 503).

## Patentansprüche

1. Verfahren zum Formen eines Ausgabekopfes (402, 502), der auf einen Behälter montiert werden soll und aus einem ersten, steifen Material und einem zweiten Elastomermaterial besteht, wobei dieser Kopf mindestens einen Ausgabedurchlaß (403, 503) für das auszugebende Produkt aufweist, wobei ein Verschlußsystem vorgesehen ist, um den Ausgabedurchlaß (403, 503) zu schließen, wobei das Verschlußsystem einen Verschluß (405A, 505A), der aus dem zweiten Material (405, 505) gebildet wird, und mindestens einen aus dem ersten Material gebildeten Sitz (415, 515) aufweist, wobei der Verschluß aus einer elastischen Lippe (405A, 505A) besteht, die sich vom Sitz (415, 515) durch Biegung senkrecht zur Druckrichtung des Produkts entfernt und mit dem Sitz (415, 515) in Kontakt steht, wenn die Ausgabe beendet ist, wobei ein aus dem ersten Material gebildetes Befestigungselement (417, 517) in den Verschluß eingelassen ist, wobei der Verschluß (405, 505) und der Sitz (410, 510) ein Verschlußansatzstück (404, 504) bilden, das in dichter Weise den sich nach außen öffnenden Endbereich des Ausgabedurchlasses (403, 503) bedeckt, wobei das Verfahren darin besteht:
a) in eine sich in zwei Teilen (M1, M2) öffnende Form, die je einen Schub (T1, T2) aufweisen, das erste steife Material einzuspritzen, um die Bereiche (410, 415, 418, 420, 450, 510, 515, 518, 520, 550) des Kopfes (402, 502) zu bilden, die aus diesem steifen Material geformt werden,
b) jeden dieser Schübe (T1 und T2) zu verschieben, um ganz um das Befestigungselement herum ein Volumen zu bilden, dessen Stärke im wesentlichen der Stärke des Verschlusses (405A, 505A) entspricht,
c) das zweite Elastomermaterial in das Volumen einzuspritzen, wobei das erste und das zweite Material untereinander chemisch nicht kompatibel sind, so daß keine chemische Verbindung zwischen dem Verschluß (504A) und seinem Sitz (515) entsteht, und
d) den Ausgabekopf aus der Form zu nehmen.

2. Verfahren nach Anspruch 1, dadurch gekennzeichnet, daß das erste Material ein Polypropylen ist.

3. Verfahren nach Anspruch 1 oder 2, dadurch gekennzeichnet, daß das zweite Material Ethylenvinylacetat ist.

4. Verfahren nach einem der Ansprüche 1 bis 3, dadurch gekennzeichnet, daß die Einspritztemperatur des zweiten Materials unter der Einspritztemperatur des ersten Materials liegt.

5. Verfahren nach einem beliebigen der vorhergehenden Ansprüche, dadurch gekennzeichnet, daß das Befestigungselement eine Stange (417, 517) ist, die den Ausgabedurchlaß (403, 503) durchquert.
